# EUROPEAN PATENT APPLICATION

(11) **EP 3 375 516 A1**
(43) Date of publication of application: **19.09.2018**
(21) Application number: 16864322.9
(22) Date of filing: 10.11.2016
(51) Int. Cl.: B01J 20/02, B01J 20/26, B01J 20/28, C01C 3/12, G21F 9/12

(54) **CESIUM RECOVERY MEMBER AND CESIUM RECOVERY METHOD**

(30) Priority: 13.11.2015 JP 2015222573
(71) Applicant: Kuraray Co., Ltd., Kurashiki-shi, Okayama 710-0801 (JP)
(72) Inventor: TANAKA, Jiro, Kurashiki-shi, Okoyama 7138550 (JP); IMAI, Kimiyasu, Osaka-shi, Osaka 5308611 (JP); SASAJIMA, Akihiro, Tokyo 1008115 (JP); MAEDA, Akinobu, Osaka-shi , Osaka 5308611 (JP)
(74) Representative: Vossius & Partner Patentanwälte Rechtsanwälte mbB
(86) International application number: PCT/JP2016/083410
(87) International publication number: WO 2017/082361

(57) **Abstract**

Provided is a cesium recovery member allowing superabsorbent polymer powder to absorb contaminated water containing radioactive cesium, and selectively recovering the radioactive cesium from the absorbed contaminated water. A cesium recovery member used herein includes a package made of a non-woven fabric, and superabsorbent polymer powder contained in the package. The non-woven fabric contains at least one compound selected from the group consisting of ferrocyanides and ferricyanides.

## Description

### TECHNICAL FIELD

The present invention relates to a cesium recovery member used to decontaminate water contaminated with radioactive cesium.

### BACKGROUND ART

Contaminated water containing a radioactive substance is generated upon leakage of a radioactive substance at a nuclear power plant accident. For example, contaminated water stored in a storage tank at a nuclear decommissioning site has leaked to pollute regions around a nuclear power plant. Radioactive cesium-containing rainwater that has fallen on the roads inside and outside a nuclear power plant is stored in cesspools, out of which contaminated water might leak in heavy rain.

Prussian blue containing iron ferrocyanide is known as adsorbing cesium. Methods of recovering radioactive cesium in contaminated water using Prussian blue have been suggested. For example, Patent Document 1 listed below discloses recovering radioactive cesium in soil using a cloth, which contains fibers with a fineness of 0.001 to 10 dtex, and Prussian blue adhered to the surfaces of the fibers with a binder.

Patent Document 2 listed below discloses a bag obtained by enclosing water-swelling, water-absorbing resin in a water-permeable package. The package is formed by layering a non-woven fabric on a cloth or a film, and fixing and integrating the non-woven fabric and the cloth or the film by needle punching and/or sewing.

Patent Document 3 listed below does not relate to recovery of radioactive cesium, but discloses, as a sandbag used as emergency treatment to prevent or reduce entering water, earth, and sand at a flood or a water disaster, a package for water-swelling, water-absorbing resin. The package is formed by layering a non-woven fabric on a cloth or a film, and fixing and integrating the non-woven fabric and the cloth or the film by needle punching and/or sewing.

Patent Document 4 listed below discloses, as a sandbag used as emergency treatment to prevent or reduce entering water, earth, and sand at a flood or a water disaster, a sandbag former obtained by containing a water-absorbing polymer material in an outer water permeable bag. An opening of the outer bag is closed by sawing, with superabsorbent polymer fine particles contained in a bag-like package made of a water-soluble polyvinyl alcohol film.

### CITATION LIST

### PATENT DOCUMENT

[Patent Document 1] Japanese Unexamined Patent Publication No. 2013-253361
[Patent Document 2] Japanese Unexamined Patent Publication No. 2015-155079
[Patent Document 3] Japanese Unexamined Patent Publication No. 2010-255346
[Patent Document 4] Japanese Unexamined Patent Publication No. 2001-279638

### SUMMARY OF THE INVENTION

### TECHNICAL PROBLEM

The use of the bag, which is disclosed in Patent Document 2 and encloses water-swelling, water-absorbing resin, allows the water-swelling, water-absorbing resin to absorb contaminated water containing radioactive cesium to recover the contaminated water. However, the bag, which has recovered the contaminated water, absorbs the water to swell to have a volume of, for example, hundreds times its original volume like a sandbag. That is, the swollen bag is extremely heavy. As a result, the contaminated water containing radioactive cesium has leaked out of the bag swollen like a sandbag and enclosing the water-swelling, water-absorbing resin, which had absorbed the water, due to its own weight or external force during transportation. In this case, the region, in which the contaminated water has leaked out, might have been polluted with radioactive cesium, or a transporter might have been exposed to the radioactive substance.

It is an objective of the present invention to provide a cesium recovery member for recovering contaminated water containing radioactive cesium, and for selectively recovering the radioactive cesium from the recovered contaminated water.

### SOLUTION TO THE PROBLEM

An aspect of the present invention is directed to a cesium recovery member including a package made of a non-woven fabric, and superabsorbent polymer powder contained in the package. The non-woven fabric contains at least one compound (hereinafter also referred to as a cesium scavenger) selected from the group consisting of ferrocyanides and ferricyanides. The superabsorbent polymer powder contained in the cesium recovery member absorbs contaminated water to swell. Radioactive cesium in the absorbed contaminated water is captured by the cesium scavenger. The radioactive cesium is selectively recovered from the contaminated water absorbed by the superabsorbent polymer using such a cesium recovery member.

The superabsorbent polymer powder is contained directly in the package in one preferred embodiment. If a package of a woven fabric or a coarse non-woven fabric contains the superabsorbent polymer powder, the superabsorbent polymer powder leaks out. Thus, the superabsorbent polymer powder needs to be contained in an inner water-soluble bag made of, for example, a water-soluble polyvinyl alcohol film. If an inner water-soluble bag contains the superabsorbent polymer powder, contaminated water passes through the package without being absorbed by the superabsorbent polymer powder until the inner bag dissolves in contact with the contaminated water. Therefore, the superabsorbent polymer powder is contained directly in the package, with no inner bag interposed therebetween, in one preferred embodiment.

The non-woven fabric contains ultrafine fibers with a finess of 1 dtex or less, and has an apparent density of 0.20 to 1.2 g/cm³ in one preferred embodiment. Since this non-woven fabric has a high and uniform fiber density, the superabsorbent polymer powder hardly leaks out of voids between the fibers. Therefore, the superabsorbent polymer powder can be contained directly in the package. The non-woven fabric has a high mechanical strength. This prevents or reduces leakage of gel of the superabsorbent polymer powder, which has absorbed water and swollen, out of the voids between the fibers, even if the gel becomes heavy like a sandbag. This non-woven fabric has a dense and uniform fiber structure, and thus supports the cesium scavenger uniformly without variation. Having such a dense and uniform fiber structure, this non-woven fabric absorbs water at a low speed, which increases the period in which the fabric touches the contaminated water.

The non-woven fabric is formed by partially adhering together wet-heat adhesive fibers assembled in one preferred embodiment. This non-woven fabric is not subjected to processing in which the fibers are mechanically entangled along the thickness of the fabric as in needle punching. Instead, the surfaces of the fibers are fixed by wet-heat-adhesion. Thus, this non-woven fabric has no hole, such as a needle mark, with a large diameter. This prevents or reduces leakage of the swollen gel out of holes. This non-woven fabric is not formed by entangling fibers by applying external physical force as in needle punching, and thus, the fibers have a uniform density. Therefore, this non-woven fabric has a high mechanical strength.

In the cesium recovery member, the package further contains at least one compound selected from the group consisting of ferrocyanides and ferricyanides in one preferred embodiment. Since the cesium scavenger is contained in the package as well, the capability of recovering radioactive cesium further improves. The cesium scavenger contained in the package is in the form of, for example, a non-woven fabric piece supporting the cesium scavenger with a help of a binder in one preferred embodiment in view of its ease of handing.

Another aspect of the present invention is directed to a cesium recovery method bringing the cesium recovery member according to any one of the aspects described above into contact with contaminated water, and allowing the superabsorbent polymer powder to absorb the contaminated water so that the member swells.

### ADVANTAGES OF THE INVENTION

The present invention recovers contaminated water containing radioactive cesium, and prevents or reduces leakage of the radioactive cesium from the recovered contaminated water.

### BRIEF DESCRIPTION OF THE DRAWINGS

[FIG. 1A] FIG. 1A is a schematic top view of a cesium recovery member 10 according to an embodiment.
[FIG. 1B] FIG. 1B is a schematic cross-sectional view of the cesium recovery member 10 according to the embodiment.
[FIG. 1C] FIG. 1C is an enlarged schematic view of a non-woven fabric forming a package 1 of the cesium recovery member 10 according to the embodiment.
[FIG. 2A] FIG. 2A illustrates a cesspool 11, around which the cesium recovery member 10 is placed, is not overfilled yet.
[FIG. 2B] FIG. 2B illustrates the cesspool 11, around which the cesium recovery member 10 is placed, and the cesspool 11 has been overfilled.
[FIG. 3] FIG. 3 is a schematic cross-sectional view of a cesium recovery member 15 according to another embodiment.
[FIG. 4] FIG. 4 is a cross-sectional scanning electron microscope (SEM) image of a non-woven fabric obtained by partially adhering an assembly of wet-heat adhesive fibers according to an example.

### DESCRIPTION OF EMBODIMENTS

An embodiment of a cesium recovery member according to the present invention will now be described.

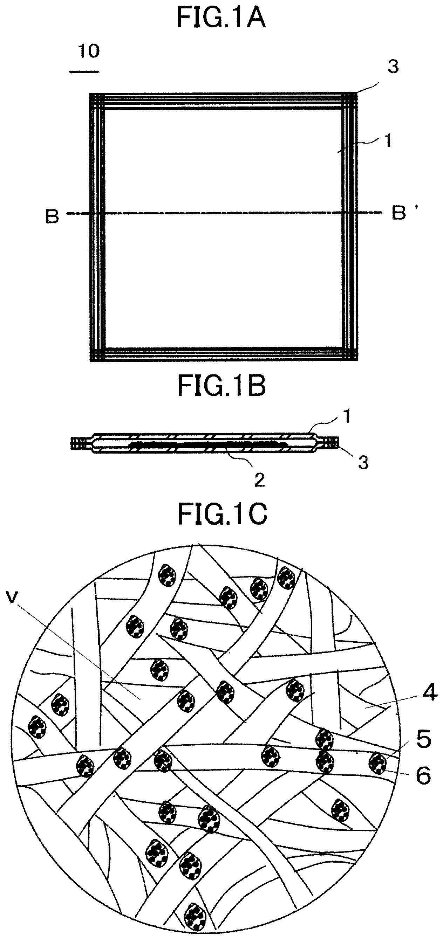

FIG. 1A is a top view of a cesium recovery member 10 according to this embodiment. FIG. 1B is a cross-sectional view taken along line B-B' of FIG. 1A. FIG. 1C is an enlarged view of a non-woven fabric forming a package 1. In FIGS. 1A, 1B, and 1C, reference numeral 1 represents the package, 2 superabsorbent polymer powder, 3 sewing threads, 4 fibers forming the non-woven fabric, 5 a cesium scavenger, 6 a binder adhering the cesium scavenger 5 to the fibers 4. Reference character v represents voids existing in the non-woven fabric.

As shown in FIGS. 1A and 1B, the cesium recovery member 10 contains a predetermined amount of the superabsorbent polymer powder 2 in the package 1 formed by layering, for example, two rectangular pieces of a non-woven fabric and sewing the peripheral edges of the fabric pieces using sewing threads 3. As shown in FIG. 1C, the cesium scavenger 5 is fixed on the surfaces of the fibers 4 forming the non-woven fabric of the package 1 by the binder 6.

The cesium scavenger 5 is supported on the surfaces of the fibers 4 by the binder 6. Radioactive cesium exists in the form of ions Cs⁺ in water. The cesium scavenger represented by MFe[Fe(CN)₆], where M is a positive ion, adsorbs Cs⁺. Thus, the cesium scavenger 5, which is supported on the surfaces of the fibers 4 of the non-woven fabric being the material of the package 1 by the binder 6, adsorbs and selectively recovers the radioactive cesium existing as ions in water.

The cesium scavenger may be ferrocyanide containing ferrocyanide ions [Fe(CN)₆]⁴⁻, or ferricyanid containing ferricyanide ions [Fe(CN)₆]³⁻, which is a complex containing cyanide ions as ligands. Specific examples may include ferrocyanides such as iron (III) hexacyanoferrate (II) (Fe₄[Fe(CN)₆]₃, ferric ferrocyanide), iron (II) hexacyanoferrate (III), ferric ammonium ferrocyanide (Fe(NH₄)[Fe(CN)₆]), ferric potassium ferrocyanide, copper ferrocyanide (Cu₂[Fe(CN)₆]), silver ferrocyanide, cadmium ferrocyanide (Cd₂Fe(CN)₆), cobalt ferrocyanide, potassium ferrocyanide (K₄[Fe(CN)₆]), lead (II) ferrocyanide (PbFe(CN)₆), and manganese (II) ferrocyanide (Mn₂Fe(CN)₆), ferricyanides such as potassium ferricyanide (K₃Fe(CN)₆), and their hydrates. These substances may be used alone or in combination, or as a roughly refined product. Out of these, Prussian blue known as blue pigment containing Fe₄[Fe(CN)₆]₃ is used in one preferred embodiment in view of its availability. Prussian blue is usually in the form of particles insoluble or hardly soluble in water. The cesium scavenger is in the form of particles in one preferred embodiment. The mean particle size of the particles is not particularly limited, but may fall within a range from 0.01 to 10 µm in one preferred embodiment, from 0.01 to 1 µm in one more preferred embodiment, and from 0.02 to 0.5 µm in one particularly preferred embodiment, because they are uniformly adhered to the surfaces of fibers and less removed.

The superabsorbent polymer powder is powder of a water-swelling superabsorbent polymer, which swells upon absorption of water. Specific examples of the superabsorbent polymer may include cross-linked polyacrylates, self-crosslinking polyacrylates, saponified products of cross-linked acrylic ester-vinyl acetate copolymers, cross-linked isobutylene-maleic anhydride copolymers, cross-linked polysulfonates, and partially cross-linked water-swelling polymers such as partially cross-linked polyethylene oxide and partially cross-linked polyacrylamide. Out of these, cross-linked polyacrylates may be selected in one preferred embodiment, and cross-linked sodium polyacrylate may be selected in one particularly preferred embodiment in view of high water absorption capacity and water absorption speed. The water (pure water) absorption capacity of the superabsorbent polymer powder may fall within a range from 10 to 1000 times its own weight in one preferred embodiment, and from 100 to 1000 times in one more preferred embodiment. A mass mean particle size (D50) of the superabsorbent polymer powder may fall within a range from 50 to 1000 µm in one preferred embodiment, and from 100 to 800 µm in one more preferred embodiment. Less fine particles with a particle size smaller than 10 µm may be contained in one preferred embodiment. Specifically, the content of the fine particles with a particle size smaller than 10 µm may fall within a range from 0 to 5 mass% in one preferred embodiment, from 0 to 3 mass% in one more preferred embodiment, and from 0 to 1 mass% in one particularly preferred embodiment.

In the cesium recovery member 10 according to this embodiment, the superabsorbent polymer powder 2 is contained directly in the package 1 of the non-woven fabric, with no inner water-soluble bag interposed therebetween. The superabsorbent polymer powder 2 immediately comes into contact with the contaminated water, which has permeated through the package 1, to absorb the water. As necessary, the superabsorbent polymer powder may be contained in an inner water-soluble bag.

The capacity of the superabsorbent polymer powder is not particularly limited. As an example, the capacity per unit area of the region of the package 1, which contains the superabsorbent polymer powder, may fall within a range from 0.25 to 2500 g/m² in one preferred embodiment, and from 5 to 1000 g/m² in one more preferred embodiment.

The non-woven fabric forming the package 1 will now be described in detail. The type of the non-woven fabric is not particularly limited, but may be a dense and highly uniform non-woven fabric in one preferred embodiment. Specifically, examples may include a non-woven fabric made of ultrafine fibers, and a non-woven fabric formed by partially adhering an assembly of wet-heat adhesive fibers, which will be described below. Such dense and highly uniform non-woven fabrics have no large hole, and thus hardly cause leakage of the superabsorbent polymer powder. In addition, having a high mechanical strength, such non-woven fabrics also hardly cause leakage of the superabsorbent polymer powder, which has swollen and gelled through absorption of water.

First, the non-woven fabric of ultrafine fibers will be described. The non-woven fabric of ultrafine fibers may be manufactured by a known manufacturing method. For example, ultrafine fiber-generating fibers such as sea-island composite fibers obtained, for example, by blend spinning or composite spinning, are subjected to melt spinning. Then, fiber webs of ultrafine fiber-generating fibers are formed. A multilayer of the fiber webs is needle-punched to entangle the ultrafine fiber-generating fibers. After that, a sea component is dissolved to obtain the ultrafine fibers. The sea-island composite fibers have a matrix-domain structure including a sea component (matrix) and island components (domain) in the cross-sections of the fibers. The resin forming the sea component is selectively dissolved or decomposed. As a result, a bundle of ultrafine fibers is formed.

Examples of the resin for forming the ultrafine fibers of the non-woven fabric are as follows. Examples may include resins capable of forming ultrafine fibers made of polyester-based resin such as polyethylene terephthalate (PET), polytrimethylene terephthalate, polybutylene terephthalate (PBT), and a polyester elastomer; polyamide-based resin such as polyamide 6, polyamide 66, polyamide 610, aromatic polyamide, and a polyamide elastomer; acrylic resin; olefin resin such as polyethylene and polypropylene. These types of resin may be used alone or in combination. Out of these, the fibers made of polyester-based resin and polyamide-based resin may be selected in one preferred embodiment in view of their high melt spinnability, and in addition, their high radiation resistance, which reduces decomposition by radiation.

Examples of the method of forming the fiber webs of the ultrafine fiber-generating fibers may include formation of filament webs, for example, by spunbonding without cutting spun sea-island filament fibers; formation of staple webs, for example, by melt-blowing of blowing off melting fibers, while stretching the fibers with air flow; formation of staple webs using a card, a cross-lapper, or a random webber after cutting filament fibers into the staple fibers. Out of these, the formation of filament webs may be selected in one preferred embodiment because a dense and uniform non-woven fabric can be obtained.

The fineness of the ultrafine fibers may be 1 dtex or less in one preferred embodiment, 0.5 dtex or less in one more preferred embodiment, 0.2 dtex or less in one particularly preferred embodiment, and 0.001 dtex or more in one preferred embodiment, 0.05 dtex or more in one more preferred embodiment. An extremely high fineness of the ultrafine fibers tends to reduce the density, uniformity, and eventually mechanical strength of the fibers. The mass per unit area of the non-woven fabric of the ultrafine fibers may fall within a range, for example, from 80 to 800 g/m² in one preferred embodiment, and from about 150 to about 500 g/m² in one more preferred embodiment. The mass per unit area in these ranges allows the ultrafine fibers to uniformly support the cesium scavenger, while maintaining their sufficient water permeability and mechanical strength.

The apparent density of the non-woven fabric of ultrafine fibers may fall within a range from 0.20 to 1.2 g/cm³ in one preferred embodiment, from 0.30 to 1.2 g/cm³ in one more preferred embodiment, from 0.30 to 1.0 g/cm³ in one further more preferred embodiment, and from 0.35 to 0.85 g/cm³ in one particularly preferred embodiment. The apparent density in these ranges leads to formation of dense ultrafine fibers, and a uniform non-woven fabric.

Next, the non-woven fabric formed by partially adhering the assembly of wet-heat adhesive fibers will be described. The "non-woven fabric formed by partially adhering the assembly of wet-heat adhesive fibers" is formed by wet heating and adhering the web, which is the assembly of wet-heat adhesive fibers. The wet-heat adhesive fibers contain wet-heat adhesive resin, which exhibits adhesiveness when wet-heated. Specifically, the fibers obtain adhesiveness when wet-heated, for example, in contact with high temperature steam or hot water, and are adhered to other wet-heat adhesive fibers, or non-wet-heat adhesive fibers, which do not exhibit adhesiveness even when wet-heated. Since the wet-heat-adhesive resin obtains adhesiveness when wet-heated, the fibers can be fixed to each other without being entangled by mechanical treatment such as needle punching and hydro-entangling. The wet-heat-adhesive resin with high hydrophilicity has excellent water absorption. If needle punching is performed, holes are formed as a trace of needle punching in the non-woven fabric, which leads to an ununiform fiber density. The portions of the fabric around the holes have a lower mechanical strength. In addition, the water, the gel having absorbed the water, and the superabsorbent polymer powder tend to leak out of the holes.

Examples of the wet-heat-adhesive resin may include the following types of resin: a polymer obtained by hydrolyzing (saponifying) a polymer of 20 to 100 mol% of a monomer containing a vinyl ester group, which forms a vinyl alcohol skeleton at hydrolysis, and 80 to 0 mol% of another monomer having an unsaturated double bond; polyalkylene oxides such as polyethylene oxide and polypropylene oxide, and polymers containing such oxides in the skeleton; cellulose and its derivatives; and the polymer obtained by polymerizing 20 to 100 mass% of a monomer containing at least one functional group selected from the group consisting of a carboxy group, a hydroxyl group, an ether group, and an amide group, and 80 to 0 mass% of another monomer having an unsaturated double bond. These types of the wet-heat-adhesive resin may be used alone or in combination. Out of these, the polymer obtained by hydrolyzing (saponifying) the polymer of 20 to 100 mol% of a monomer containing a vinyl ester group, which forms a vinyl alcohol skeleton at hydrolysis, and 80 to 0 mol% of another monomer having an unsaturated double bond may be selected in one preferred embodiment in view of its high wet-heat adhesiveness and maintaining its high strength and wear resistance. With respect to the polymer of the monomer containing a vinyl ester group and the other monomer, the vinyl ester unit in the main chain skeleton is converted to a vinyl alcohol unit in saponification.

The copolymerization ratio of the other monomer unit in the polymer containing the monomer containing a vinyl ester group unit and the other monomer unit may fall within a range from 20 to 60 mol% in one preferred embodiment, from 25 to 55 mol% in one more preferred embodiment, and from 30 to 50 mol% in one particularly preferred embodiment. Such a polymer may be a product obtained by saponifying an ethylene-vinyl ester copolymer (also called an ethylene-vinyl alcohol copolymer (EVOH)), which is a product obtained by saponifying a polymer of vinyl acetate and ethylene, in one particularly preferred embodiment.

The wet-heat adhesive fibers contained in the web, which is the "assembly of the wet-heat adhesive fibers," may be fibers containing only a simplex type of wet-heat-adhesive resin, composite fibers obtained by combining and compositing two or more different types of wet-heat-adhesive resin, or composite fibers obtained by combining wet-heat-adhesive resin and non-wet-heat adhesive resin, which does not exhibit adhesiveness even when wet-heated. The conditions of wet-heating are not particularly limited, but the resin may be brought into contact with high temperature steam or hot water within a range of, for example, from 70 to 150°C in one preferred embodiment, from 90 to 130°C in one more preferred embodiment, and from about 80 to about 120°C in one particularly preferred embodiment. The composite fibers of wet-heat-adhesive resin and non-wet-heat adhesive resin may be selected in one preferred embodiment in view of their adjustability of the apparent density and strength of the non-woven fabric to be obtained. Specific examples of the non-wet-heat-adhesive resin may include polyester-based resin such as polyethylene terephthalate, polytrimethylene terephthalate, polybutylene terephthalate, and polyethylene naphthalate; polyolefin based resin such as polypropylene-based resin; polyamide-based resin such polyamide 6, polyamide 66, polyamide 610, polyamide 10, polyamide 12, polyamide 6-12, and polyamide 9T; (meth)acrylic-based resin; vinyl chloride-based resin; styrene-based resin; polycarbonate-based resin; polyurethane-based resin; and non-water-soluble resin such as thermoplastic elastomer. These types of resin may be used alone or in combination. Out of these, polyester-based resin and polyamide-based resin may be selected in one preferred embodiment, and polyethylene terephthalate may be selected in one particularly preferred embodiment in view of their higher melting point than those of wet-heat-adhesive resin such as EVOH, and excellent heat resistance and processability into fibers.

If contained in the composite fibers, the wet-heat-adhesive resin is adhered to the surfaces of the fibers made of non-wet-heat-adhesive resin continuously along the lengths of the fibers in one preferred embodiment. Examples of the transverse sectional phase structure of the composite fibers may include sheath-core, sea-island, side-by-side, multilayer bonding, radial bonding, and random composite types. Out of these, the sheath-core structure containing wet-heat-adhesive resin as the sheath, and fibers of non-wet-heat-adhesive resin or another wet-heat-adhesive resin as the core, and covering the surfaces of the fibers with the wet-heat-adhesive resin may be selected in one preferred embodiment in view of its high wet-heat-adhesiveness. The wet-heat adhesive fibers may be formed by coating the surfaces of the non-wet-heat adhesive fibers with wet-heat-adhesive resin.

The fineness of the wet-heat and non-wet-heat adhesive fibers forming the fiber webs is not particularly limited, but may fall within a range, for example, from 1 to 10 dtex in one preferred embodiment, and from about 1 to about 6 dtex in one more preferred embodiment. An extremely high fineness increases the sizes of the voids between the fibers so that the water, the gel having absorbed the water, and the superabsorbent polymer powder tend to leak out.

The apparent density of the non-woven fabric formed by partially adhering wet-heat adhesive fibers may fall within a range from 0.05 to 0.40 g/cm³ in one preferred embodiment, from 0.10 to 0.30 g/cm³ in one more preferred embodiment, and from 0.10 to 0.20 g/cm³ in one particularly preferred embodiment. An extremely low apparent density tends to reduce the mechanical strength, and increase the sizes of the voids between the fibers.

How to allow the non-woven fabric described above to contain the cesium scavenger will now be described. The cesium scavenger may be contained in the non-woven fabric, for example, through adhesion to the surfaces of the fibers forming the non-woven fabric with a binder.

As the binder, any resin capable of fixing the cesium scavenger to the surfaces of the fibers may be used without particular limitation. Specific examples of the binder may include resin such as polyurethane, acrylic resin, polyethylene, polyolefin, petroleum resin, asphalt, isoprene-based hydrocarbon, butadiene rubber, and vinyl chloride.

The binder exists not to block inner voids for maintaining the water permeability of the non-woven fabric. Specifically, as shown in FIG. 1C, the binder 6 is scattered into particles adhered to the surfaces of the fibers 4. In order to adhere the binder uniformly on the surfaces of the fibers of the non-woven fabric, for example, the resin obtained by solidifying a polyurethane elastomer emulsion or an acrylic resin elastomer emulsion may be used as the binder in one particularly preferred embodiment. The binder obtained by solidifying such an emulsion easily absorbs water, and has thus excellent contact properties with the contaminated water containing cesium ions and the cesium scavenger.

The ratio of the cesium scavenger to the fibers may fall within a range from 0.00001 to 50 mass% in one preferred embodiment, from 0.001 to 30 mass% in one more preferred embodiment, and from 0.01 to 20 mass% in one particularly preferred embodiment. An extremely low ratio of the cesium scavenger to the fibers tends to reduce the efficiency of cesium recovery. On the other hand, an extremely high ratio of the cesium scavenger to the fibers requires an increase in the ratio of the binder to sufficiently adhere the cesium scavenger. This case tends to reduce the ratio of the inner voids in the non-woven fabric, thereby reducing the water absorption speed.

To allow the binder, which adheres the cesium scavenger to the non-woven fabric, to exist not to block the inner voids for maintaining the water permeability, for example, the emulsion of the binder, in which the cesium scavenger is dispersed, may be impregnated into the non-woven fabric, and then the binder may be solidified. The emulsion may be impregnated into the non-woven fabric using, for example, a knife coater, a bar coater, or a roll coater, or by dipping.

In this manner, the non-woven fabric allowing the binder to support the cesium scavenger on the surfaces of the fibers is obtained. The density of the cesium scavenger such a Prussian blue filling the non-woven fabric is not particularly limited, but, for example, may fall within a range from 0.1 to 1000 mg/cm³ in one preferred embodiment, from 0.1 to 500 mg/cm³ in one more preferred embodiment, and from 0.5 to 250 mg/cm³ in one particularly preferred embodiment.

The thickness of the non-woven fabric may fall within a range from 0.3 to 4 mm in one preferred embodiment, from 0.4 to 3 mm in one more preferred embodiment, and from 0.5 to 2 mm in one particularly preferred embodiment, or alternatively from 0.8 to 1.5 mm.

The non-woven fabric may have a bursting strength of 10 kg/cm² or more in one preferred embodiment, 15 kg/cm² or more in one more preferred embodiment, and 20 kg/cm² or more in one particularly preferred embodiment, as measured by a Muellen bursting strength testing method according to ASTM D3786. The upper limit is not particularly limited, but may be usually 50 kg/cm², and about 100 kg/cm² in one more preferred embodiment. In the examples, which will be described later, the area of a burst portion was about 5 cm². The bursting force calculated from the area of this burst portion and the bursting strength may be 490 N or more in one preferred embodiment, 735 N or more in one more preferred embodiment, and 980 N or more in one particularly preferred embodiment in view of less damaging the package in transportation of the cesium recovery member after absorbing the water. The upper limit is not particularly limited, but may be usually 2450 N in one more preferred embodiment, and about 4900 N in one more preferred embodiment.

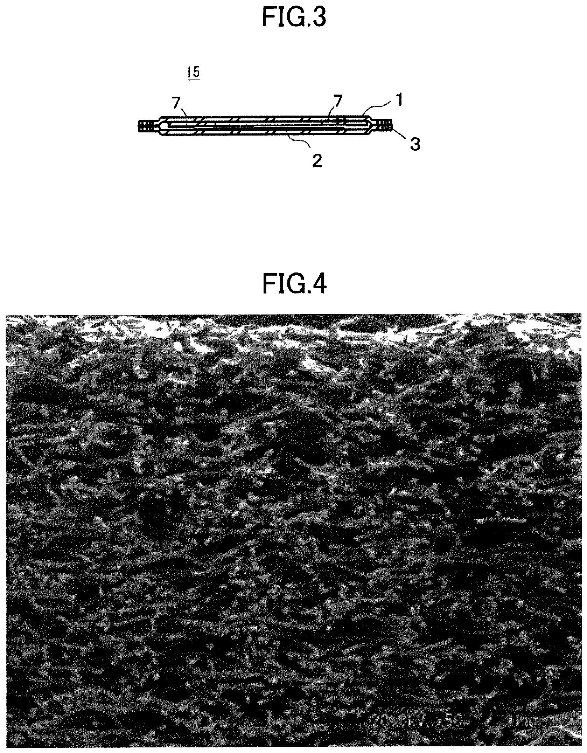

In the cesium recovery member according to this embodiment, the package may further contain the cesium scavenger. When the cesium scavenger is contained in the package as well, the adsorbability of radioactive cesium further improves. To allow the package to further contain the cesium scavenger, for example, a cesium recovery member 15 may be used. The cesium recovery member 15 corresponds to the cesium recovery member 10 shown in FIG. 1B, but further contains and encloses pieces 7 of a fiber base material such as a non-woven fabric containing the cesium scavenger, as shown in FIG. 3.

The size and shape of the cesium recovery member according to this embodiment are not particularly limited, and adjusted as appropriate depending on the purpose. As an example, the cesium recovery member may have a rectangular shape with a length of 10 to 80 cm per side.

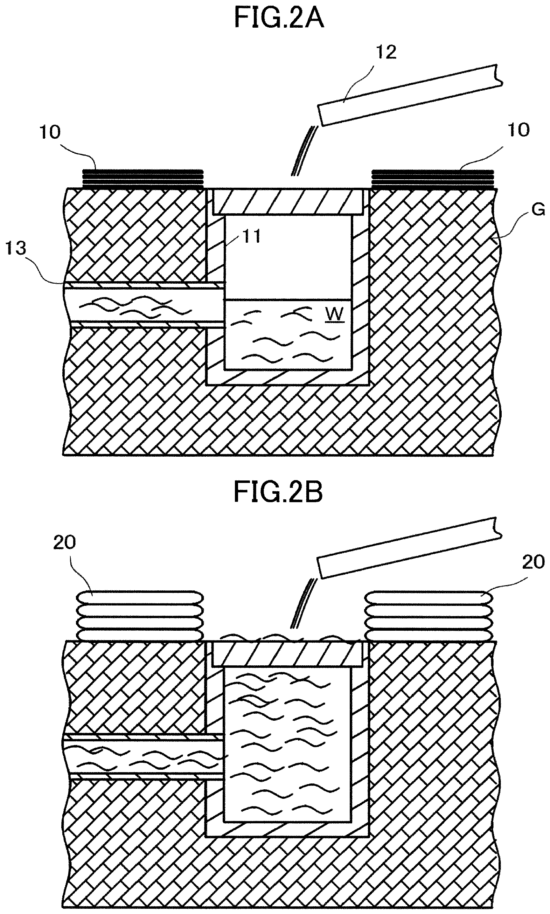

The cesium recovery member according to this embodiment is placed in a region in which water contaminated with radioactive cesium exists, and allows the superabsorbent polymer powder to absorb the contaminated water to swell. Then, the cesium recovery member is used, for example, as a sandbag. More specific use example will be described with reference to FIGS. 2A and 2B.

FIG. 2A illustrates a cesspool 11, around which the cesium recovery member 10 is placed , is not overfilled yet. FIG. 2B illustrates the cesspool 11, around which the cesium recovery member 10 is placed , is overfilled. In FIG. 2A, cesium recovery members 10 are layered on soil G around the cesspool 11 as a risk management measure in heavy rain. During rainfall, a rain gutter 12 collects rainwater, which is to be stored in the cesspool 11. If the rainwater contains radioactive cesium, the stored water is contaminated water W. The contaminated water W stored in the cesspool 11 is discharged through a horizontal pipe 13 to a storage tank (not shown).

In heavy rain, water is insufficiently discharged through the horizontal pipe 13, and the water stored in the cesspool 11 overflows as shown in FIG. 2B. If the contaminated water W overflows and spreads to the area around the cesspool 11, the area is polluted with the contaminated water. If the cesium recovery members 10 before absorbing water are placed around the area before the cesspool 11 is overfilled as shown in FIG. 2A, the cesium recovery members 10 absorb the contaminated water W, which overflows out of the cesspool 11 in heavy rain. As shown in FIG. 2B, the cesium recovery members 10 absorb the contaminated water W to swell to sizes tens to hundreds times the original sizes to form sandbag-like objects 20. The sandbag-like objects 20 serve as sandbags blocking the spread of the contaminated water W to the surrounding area, and recover radioactive cesium from the absorbed contaminated water W. In this manner, the spread of the radioactive cesium within the contaminated water W to the area around the cesspool 11 is prevented or reduced. If the sandbag-like objects 20, which have absorbed the contaminated water W, are dried, their volume and weight decrease. The sandbag-like objects 20 are thus easily handled in transportation after use or incineration as a waste.

### Examples

The present invention will now be described in more detail by way of examples. The scope of the present invention is not limited to the following examples.

### Example 1

Water-soluble thermoplastic polyvinyl alcohol (PVA)-based resin was used as a sea component. PET modified with 6 mol% of isophthalic acid was used as an island component. A spinneret for melt-conjugate spinning was used to eject sea-island filament fibers at 260°C, each including 25 islands at a ratio of the sea component to the island component of 25/75 (mass ratio). The pressure of an ejector was adjusted so that the spinning speed was 3700 m/min to collect sea-island filament fibers with an average fineness of 2.1 dtex on a net. The sea-island filament fibers collected on the net were pressed softly using a metal roll with a surface temperature of 42°C to reduce fluffs on the surfaces of the filament fibers, and then removed from the net. The sea-island filament fibers passed between a lattice-patterned metal roll with a surface temperature of 75°C and a back roll to be thermally pressed. As a result, filament webs with a mass per unit area of 31 g/m² were obtained, which include temporarily fused ultrafine fibers on their surfaces.

Eight of the obtained filament webs were layered by cross-lapping, and sprayed with needle breakage prevention oil. The multilayer was needle-punched at a density of 3300 punch/cm² alternately from both sides, using 6-barb needles with a distance of 3.2 mm from the needle tip to the first barb at a depth of 8.3 mm. As a result, an entangled filament web with a mass per unit area of 320 g/m² was obtained.

Then, the entangled filament web was immersed in hot water of 70°C for 14 seconds at a rolling line speed 10 m/min to be thermally shrunk. Dip-nip treatment was repeated in hot water of 95°C to dissolve and remove PVA up to a removal rate of 98% or more. As a result, a non-woven fabric of ultrafine fibers was obtained, which was formed by entangling a bundle of 25 ultrafine filament fibers with a fineness of 0.1 dtex three-dimensionally. The non-woven fabric was buffed to prepare a non-woven fabric with an apparent density of 0.52 g/cm³ and a thickness of 1 mm.

On the other hand, Prussian blue (product name MILORIBLUE 905 manufactured by Dainichiseika Color & Chemicals Mfg. Co., Ltd.) with a mean particle size of 0.08 µm was dispersed in a polyurethane emulsion at a mass ratio of Prussian blue/a polyurethane solid content of 1/3 . The polyurethane emulsion was a water-emulsifiable polyurethane emulsion having a swelling ratio of 9 mass% in hot water of 130°C, and containing a soft segment made of a mixture of polyhexylene carbonate diol and polymethylpentan diol at a ratio of 70:30.

The non-woven fabric with an adjusted thickness was impregnated with the emulsion dispersed with Prussian blue so that 6 mass% of the polyurethane solid was contained with respect to the mass of the non-woven fabric, and dried. As a result, a non-woven fabric was obtained, which contained a non-woven fabric of ultrafine fibers with a fineness of 0.1 dtex and an apparent density of 0.52 g/cm³. The obtained non-woven fabric had a bursting strength of 21.0 kg/cm² as measured by the Muellen bursting strength testing method according to ASTM D3786. The bursting force obtained by multiplying the bursting strength by 49 (cm² × kg f) was 1029 N.

The bursting strength of the non-woven fabric is measured by the Muellen bursting strength testing method according to ASTM D3786. The bursting strength was multiplied by the area (5 cm²) of the burst portion, and then by 9.8 for conversion to Newton (N) to obtain the bursting force of the burst portion.

Rectangles with a size of 10 × 20 cm each were cut out from the obtained non-woven fabric. The cut-out rectangles of the non-woven fabric were sewn together at the peripheral edges of three of the sides to form a bag body. the water-absorbing polymer powder of 4 g was put into the bag body, and then the last one sides were sewn to form the package. At this time, the amount of the water-absorbing polymer powder was 200 g/m² per area of the non-woven fabric. As the superabsorbent polymer powder, a sodium polyacrylate cross-linked body (SunFresh manufactured by SDP Global Co., Ltd. having a water absorption capacity of 400 times its own weight, and a mass mean particle size of 430 µm, and containing 95% or more of particles within a range from 150 to 710 µm, and 1% or less of particles with a particle size of 10 µm or smaller) was used. In this manner, the cesium recovery member was produced.

The cesium recovery member was immersed in the contaminated water containing radioactive cesium at a concentration of 294 Bq/kg. The cesium recovery member swollen after absorbing water was then pulled up. The radioactive cesium adsorbability of the cesium recovery member at that time was evaluated as follows.

### Evaluation 1: Concentration of Radioactive Cesium in Gel Immediately After Pull-Up After 30-Minute Immersion

A syringe needle was stuck into the package of the cesium recovery member swollen after being immersed in contaminated water for 30 minutes to extract a small amount of the inside gel. The concentration of the radioactive cesium in the contaminated water absorbed in the gel was measured.

### Evaluation 2: Concentration of Radioactive Cesium in Gel Immediately After Pull-Up After One-Day Immersion

A syringe needle was stuck into the package of the cesium recovery member swollen after being immersed in contaminated water for one day to extract a small amount of the inside gel. The concentration of the radioactive cesium in the contaminated water absorbed in the gel was measured.

### Evaluation 3: Amount of Contaminated Water Leaked out of Package and Concentration of Radioactive Cesium in Contaminated Water Having Leaked, 5 Days After Pulling up Cesium Recovery Member Immersed for One Day

The cesium recovery member swollen after being immersed in the contaminated water for one day was pulled up, and left on the floor for five days. The amount of the contaminated water leaked out of the package of the swelling cesium recovery member was measured. In addition, a syringe needle was stuck into the package to extract a small amount of the inside gel. The concentration of the radioactive cesium in the contaminated water absorbed in the gel was measured.

### Evaluation 4: Migration of Radioactive Cesium from Package 5 Days After Pulling up to Pure Water

The cesium recovery member swollen after being immersed in the contaminated water for one day was pulled up, and left on the floor for five days. The swollen cesium recovery member was then immersed in 1.2 L of pure water for one day. The concentration of the radioactive cesium migrated into the pure water was measured.

### Evaluation 5: Leakage of Gel

The cesium recovery member swollen after being immersed in the contaminated water for one day was pulled up, and left on the floor for five days. The swollen cesium recovery member was then observed visually to determine the state of the leakage of the gel according to the following standard.
A: No leakage of the gel was acknowledged visually or by touching.
B: The bag was slippery to the touch due to leakage of the polymer.
C: Obvious leakage of the polymer was acknowledged visually.
D: The bag was broken and the polymer leaked out.

### Evaluation 6: Transportability

A: Three or more stages of the cesium recovery members were stacked on a hand truck and transported.
B: Flow-out of the polymer was acknowledged, when three stages of the cesium recovery members were stacked on the hand truck. Two stages of the cesium recovery members were stacked and transported.
C: Flow-out of the polymer and the contaminated water was acknowledged and no transportation was possible, even when one stage of the cesium recovery members was mounted on the hand truck.

The result is shown in Table 1.

**Table 1**

| Example No. | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Com. Ex. 1 |
|---|---|---|---|---|---|---|---|---|---|---|---|---|---|---|
| Finess (dtex) | 0.1 | 0.1 | 2 | 0.1 | 0.1 | 0.1 | 0.1 | 0.1 | 0.1 | 8 | 2 | 5.6 | 15 | 0.1 |
| Apparent Density (g/cm³) | 0.52 | 0.52 | 0.17 | 0.65 | 0.46 | 0.395 | 0.25 | 0.14 | 0.08 | 0.28 | 0.08 | 0.14 | 0.18 | 0.52 |
| Bursting Strength (kg/cm²) | 21.0 | 21.0 | 12.0 | 30.4 | 20.0 | 17.3 | 11.8 | 8.6 | 5.1 | 6.9 | 6.5 | 10.6 | 6.1 | 20.0 |
| Bursting Force (N) | 1029 | 1029 | 590 | 1490 | 980 | 850 | 580 | 420 | 250 | 340 | 320 | 520 | 300 | 980 |
| Presence or Absence of Prussian Blue | Presence | Presence (Pieces) | Presence | Presence | Presence | Presence | Presence | Presence | Presence | Presence | Presence | Presence | Presence | Absence |
| Evaluation 1: Concentration (Bq/kg) of Radioactive Cesium in Gel Immediately After Pull-Up After 30 Minute-Immersion | 164 | 160 | 170 | 170 | 146 | 138 | 125 | 120 | 125 | 130 | 138 | 165 | 160 | 294 |
| Evaluation 2: Concentration (Bq/kg) of Radioactive Cesium in Gel Immediately After Pull-Up After One-Day Immersion | 65 | 30 | 75 | 62 | 60 | 65 | 63 | 75 | 90 | 62 | 64 | 70 | 64 | 290 |
| Evaluation 3: Amount (mL) of Contaminated Water Leaked out of Packaging Material 5 Days after Pull-Up After One-Day Immersion | 5 | 10 | 10 | 3 | 5 | 6 | 6 | 20 | 35 | 25 | 35 | 12 | 25 | 5 |
| Evaluation 3: Concentration (Bq/kg) of Radioactive Cesium in Leaked Contaminated Water | 60 | 25 | 70 | 60 | 55 | 61 | 59 | 75 | 90 | 61 | 64 | 65 | 80 | 290 |
| Evaluation 4: Concentration (Bq/kg) of Radioactive Cesium in Water After Being Immersed in Pure Water | 5 or less | 5 or less | 12 | 5 or less | 5 or less | 5 or less | 5 or less | 18 | 25 | 28 | 33 | 13 | 43 | 80 |
| Evaluation 5: Leakage of Gel | A | A | B | A | A | A | A | B | D | C | C | A | C | A |
| Evaluation 6: Transportability | A | A | B | A | A | A | A | C | C | C | C | B | C | A |

### Example 2

The non-woven fabric used in Example 1 was cut into strip-like pieces with a size of 2 × 2 cm, and contained in the package. Otherwise, the cesium recovery member was fabricated and evaluated in the same manner as in Example 1. The result is shown in Table 1.

### Example 3

A needle-punched non-woven fabric was prepared, which was made of PET fibers with a fineness of 2 dtex, and had an apparent density of 0.17 g/cm³ and a bursting force of 590 N. The non-woven fabric used in Example 1 was replaced with the prepared needle-punched non-woven fabric. Otherwise, the cesium recovery member was fabricated and evaluated in the same manner as in Example 1. The result is shown in Table 1.

### Examples 4 to 9

The non-woven fabrics with apparent densities shown in Table 1 were fabricated by changing needle punching conditions in the fabrication of the non-woven fabric of Example 1. Otherwise, the cesium recovery member was fabricated and evaluated in the same manner as in Example 1. The result is shown in Table 1.

### Example 10

A needle-punched non-woven fabric was prepared, which was made of PET fibers with a fineness of 8 dtex, and had an apparent density of 0.28 g/cm³ and a bursting force of 340 N. The non-woven fabric used in Example 1 was replaced with the prepared needle-punched non-woven fabric. Otherwise, the cesium recovery member was fabricated and evaluated in the same manner as in Example 1. The result is shown in Table 1.

### Example 11

A needle-punched non-woven fabric was prepared, which was made of PET fibers with a fineness of 2 dtex, and had an apparent density of 0.08 g/cm³ and a bursting force of 320 N. The non-woven fabric used in Example 1 was replaced with the prepared needle-punched non-woven fabric. Otherwise, the cesium recovery member was fabricated and evaluated in the same manner as in Example 1. The result is shown in Table 1.

### Example 12

As the wet-heat adhesive fibers, sheath-core conjugate staple fibers (with a length of 51 mm, a sheath-core mass ratio of 50/50) were prepared, which contained polyethylene terephthalate (PET) as a core component, and an ethylene-vinyl alcohol copolymer (EVOH) (with an ethylene copolymerization ratio of 44 mol%, a saponification degree of 98.4 mol%, and a melting point of 165°C) as a sheath component.

The wet-heat adhesive fibers were used to fabricate a card web with a mass per unit area of about 400 g/m² by carding. This card web was transported to an apparatus for wet-heat treatment including a conveyor and steam injectors injecting steam to the path of the conveyor.

The conveyor includes a pair of upper and lower mesh conveyors, each of which is made of a polycarbonate endless net with 50 mesh and a width of 500 mm. The upper and lower mesh conveyors run in the same direction at the same speed. The distance between the upper and lower mesh conveyors may be adjusted as appropriate. Upstream of the conveyor, one of the steam injector, which injects high-temperature steam toward the conveyed card web via a net, is located on the back of the lower mesh conveyor, while a suction apparatus is located on the back of the upper mesh conveyor. In contrast, downstream of the conveyor, another suction apparatus similar to the suction apparatus is located on the back of the lower mesh conveyor, while the other steam injector similar to the one of the steam injectors is located on the back of the upper mesh conveyor. Each of the steam injectors includes nozzles with a hole size of 0.3 mm arranged at a pitch of 1 mm in line along the width of the conveyor. The nozzles are located on the back of the nets of the mesh conveyors almost in contact with the nets. This configuration enables injection of high-temperature steam to both the sides of the surfaces of the card webs.

The conveyed card web was subjected to steam treatment by injecting high-temperature steam of 0.4 MPa substantially vertically from the steam injectors. The transportation speed of the conveyor was 3 m/min. The distance between the upper and lower mesh conveyors was adjusted to obtain a non-woven fabric with a thickness of about 2.0 mm. The non-woven fabric formed in this manner by wet-heat-adhesion of the wet-heat adhesive fibers was impregnated with an aqueous solution containing 0.25 mass% of an water permeability improver (an anionic surfactant "Suparan 33" manufactured by Ipposha Oil Industries Co., Ltd.) so that the picking up rate was 55%, and then dried. As a result, a non-woven fabric with a fineness of 5.6 dtex and an apparent density of 0.14 g/cm³ was obtained. As shown in FIG. 4, the non-woven fabric had a uniform cross-section, and neither fiber oriented along the thickness of the fabric nor large ununiform void was observed. The obtained non-woven fabric had a bursting force of 520 N.

The non-woven fabric used in Example 1 was replaced with the obtained non-woven fabric formed by partially adhering the assembly of the wet-heat adhesive fibers. Otherwise, the cesium recovery member was fabricated and evaluated in the same manner as in Example 1. The result is shown in Table 1.

### Example 13

The non-woven fabric made of wet-heat adhesive fibers with a fineness of 5.6 dtex according to Example 12 was replaced with a non-woven fabric made of wet-heat adhesive fibers with a fineness of 15 dtex. Otherwise, the cesium recovery member was fabricated and evaluated in the same manner as in Example 12. The result is shown in Table 1.

### Comparative Example 1

No Prussian blue was contained in the non-woven fabric used in Example 1. Otherwise, the cesium recovery member was fabricated and evaluated using a nonwoven fabric similar to that of Example 1. The result is shown in Table 1.

It is found from the results shown in Table 1 that the cesium recovery members of Examples 1 to 13, which had been immersed in the contaminated water containing radioactive cesium at a concentration of 294 Bq/kg for 30 minutes, had the concentration of the radioactive cesium in the contaminated water absorbed in the inside gel within a range from 160 to 170 Bq/kg, immediately after pulling up, and that the radioactive cesium was reduced in the contaminated water. The concentration of the radioactive cesium in the contaminated water absorbed in the inside gel immediately after pulling up the cesium recovery members, which had been immersed in the contaminated water for one day, was reduced more significantly. It is thus found that the amount of the radioactive cesium was reduced significantly in the contaminated water.

### DESCRIPTION OF REFERENCE CHARACTERS

- 1: Package
- 2: Superabsorbent Polymer Powder
- 3: Sewing Thread
- 4: Fiber
- 5: Cesium Scavenger
- 6: Binder
- 7: Piece of Fiber Base Material Containing Cesium Scavenger
- 10: Cesium Recovery Member
- 11: Cesspool
- 12: Rain Gutter
- 13: Horizontal Pipe
- 20: Sandbag-Like Object

## Claims

1. A cesium recovery member comprising:
a package made of a non-woven fabric; and
superabsorbent polymer powder contained in the package, wherein
the non-woven fabric contains at least one compound selected from the group consisting of ferrocyanides and ferricyanides.

2. The cesium recovery member of claim 1, wherein
the superabsorbent polymer powder is contained directly in the package, with no inner bag interposed therebetween.

3. The cesium recovery member of claim 1 or 2, wherein
the non-woven fabric contains ultrafine fibers with a finess of 1 dtex or less, and has an apparent density of 0.20 to 1.2 g/cm³.

4. The cesium recovery member of claim 1 or 2, wherein
the non-woven fabric is formed by partially adhering together wet-heat adhesive fibers assembled.

5. The cesium recovery member of claim 4, wherein
the non-woven fabric formed by partially adhering together the wet-heat adhesive fibers assembled is formed by partially adhering together wet-heat adhesive fibers assembled of 1 to 10 dtex, and having an apparent density of 0.05 to 0.40 g/cm³.

6. The cesium recovery member of any one of claims 1 to 5, wherein
the package further contains at least one compound selected from the group consisting of ferrocyanides and ferricyanides.

7. The cesium recovery member of any one of claims 1 to 6, wherein
the non-woven fabric has a bursting strength of 10 kg/cm² or more as measured by a Muellen bursting strength testing method according to ASTM D3786.

8. The cesium recovery member of any one of claims 1 to 7, wherein
the non-woven fabric has a bursting force of 490 N or more, which is obtained by multiplying the bursting strength measured by the Muellen bursting strength testing method according to ASTM D3786 by 49 (cm² × kg f).

9. The cesium recovery member of any one of claims 1 to 8, wherein
the compound is Prussian blue.

10. A cesium recovery method comprising:
placing the member of any one of claims 1 to 9 in a region in which water contaminated with radioactive cesium exists; and
allowing the superabsorbent polymer powder to absorb the contaminated water so that the member swells.
